(19) **Europäisches Patentamt**

**European Patent Office**

**Office européen des brevets**

(11) **EP 1 327 859 A2**

(12) **EUROPÄISCHE PATENTANMELDUNG**

| | |
|---|---|
| (43) Veröffentlichungstag:<br>**16.07.2003 Patentblatt 2003/29** | (51) Int Cl.⁷: **G01C 25/00**, G01C 9/00 |

(21) Anmeldenummer: **03000212.5**

(22) Anmeldetag: **07.01.2003**

| | |
|---|---|
| (84) Benannte Vertragsstaaten:<br>**AT BE BG CH CY CZ DE DK EE ES FI FR GB GR HU IE IT LI LU MC NL PT SE SI SK TR**<br>Benannte Erstreckungsstaaten:<br>**AL LT LV MK RO** | (72) Erfinder:<br>• **Freese, Wolfgang J.F.**<br>**51789 Lindlar (DE)**<br>• **Hell, Jürgen**<br>**51429 Bergisch-Gladbach (DE)** |
| (30) Priorität: **10.01.2002 DE 10200693** | (74) Vertreter: **Manitz, Finsterwald & Partner GbR**<br>**Postfach 31 02 20**<br>**80102 München (DE)** |
| (71) Anmelder: **Delphi Technologies, Inc.**<br>**Troy, MI 48007 (US)** | |

(54) **Verfahren zur Kalibrierung eines Neigungssensors**

(57) Bei einem Verfahren zur Kalibrierung eines Neigungssensors wird in einem ersten Erfassungsschritt der Neigungssensor in einer vorgegebenen Anfangsorientierung angeordnet und ein erstes Sensorsignal erfasst. In wenigstens drei weiteren Erfassungsschritten wird der Neigungssensor jeweils durch Drehen in verschiedene, vorgegebene weitere Orientierungen im Raum gebracht und es werden jeweils entsprechende Sensorsignale erfasst.

Fig. 1

**Beschreibung**

Die vorliegende Erfindung betrifft ein Verfahren zur Kalibrierung eines Neigungssensors sowie ein Neigungssensorsystem.

Neigungssensorsysteme dienen zur Bestimmung einer Neigung gegenüber der Erdbeschleunigung oder der Horizontalen, das heißt einer zur Erdbeschleunigung orthogonalen Richtung.

Solche Neigungssensorsysteme umfassen dazu einen Neigungssensor, mit dem die eigentliche Bestimmung der Neigung erfolgt. Dabei weist jeder Neigungssensor eine oder mehrere Sensorachsen auf, deren Winkel gegenüber der Erdbeschleunigung oder gegenüber einer Horizontalen bei der Entwicklung der Neigung bestimmt wird. Dazu gibt der Neigungssensor entsprechende Sensorsignale aus, die anhand einer Kennlinie in der jeweiligen Sensorachse zugeordnete Neigungswinkel oder davon abhängige Größen, insbesondere den Sinus oder Kosinus des Neigungswinkels, umsetzbar sind. Hierzu kann eine entsprechende Auswerteeinrichtung, die die Sensorsignale des Neigungssensors erfasst und entsprechend der Kennlinie Signale in Bezug auf den Neigungswinkel ausgibt, in dem Neigungssensorsystem vorgesehen sein.

Für eine genaue Funktion des Neigungssensorsystems ist es notwendig, die Kennlinie für jedes System einzeln zu bestimmen, das heißt den Neigungssensor zu kalibrieren. Im Falle einer linearen Kennlinie ist zur Bestimmung derselben nur die Bestimmung der Steigung der Kennlinie, das heißt der Sensitivität des Neigungssensors, und des Achsenabschnitts notwendig.

Eine Kalibrierung eines zweiachsigen Neigungssensorsystems mit zwei zueinander orthogonalen Sensorachsen kann beispielsweise folgendermaßen erfolgen: zunächst wird das Neigungssensorsystem bzw. der Neigungssensor mit den Sensorachsen in einer horizontalen Richtung angeordnet. Sodann werden erste Sensorsignale für jede der Sensorachsen erfasst. Daraufhin wird das Neigungssensorsystem um die zweite Sensorachse um einen vorgegebenen Winkel, beispielsweise 30°, ausgehend von der Anfangsorientierung gedreht und ein entsprechendes zweites Sensorsignal bezüglich der ersten Sensorachse erfasst. Dann wird das Neigungssensorsystem um die gleiche Achse ausgehend von der Anfangsorientierung um den gleichen Winkel in entgegengesetzter Richtung gedreht und ein entsprechendes drittes Sensorsignal bezüglich der ersten Sensorachse erfasst. Aus den drei Sensorsignalen bezüglich der ersten Sensorachse kann dann leicht sowohl der Achsenabschnitt als auch die Steigung bzw. die Sensitivität der Kennlinie der ersten Sensorachse bestimmt werden. Zur Kalibrierung des Neigungssensorsystems in Bezug auf die zweite Sensorachse werden die Drehungen um die erste Sensorachse durchgeführt, entsprechende Sensorsignale bezüglich der zweiten Sensorachse aufgezeichnet und analog zur Bestimmung der Kennlinie für die erste Sensorachse die Kennlinie für die zweite Sensorachse bestimmt.

Dieses Verfahren hat jedoch den Nachteil, dass die tatsächliche Lage der Sensorachsen sowohl in dem Neigungssensor selbst als auch in dem Neigungssensorsystem nicht genau bekannt ist. Bei der Kalibrierung werden also nur erwartete Lagen von Sensorachsen verwendet. Bei einer Abweichung zwischen tatsächlicher Lage der Sensorachsen und vermuteter bzw. angenommener Lage der Sensorachsen können sich Kalibrierungsfehler ergeben, die die zuverlässige Funktion des Neigungssensorsystems beeinträchtigen können.

Darüber hinaus ist es notwendig, das Neigungssensorsystem in fünf verschiedene Orientierungen zu bringen, was einen entsprechenden Zeitaufwand mit sich bringt.

Der vorliegenden Erfindung liegt die Aufgabe zugrunde, ein zuverlässiges und schnelles Kalibrierungsverfahren für Neigungssensoren bereitzustellen.

Die Aufgabe wird gelöst durch ein Verfahren zur Kalibrierung eines Neigungssensors mit den Merkmalen des Anspruchs 1.

Bei dem erfindungsgemäßen Verfahren zur Kalibrierung eines Neigungssensors, das zur Bestimmung einer Neigung gegenüber der Richtung der Erdbeschleunigung oder der Horizontalen und zur Ausgabe eines entsprechenden Sensorsignals dient, das der Neigung einer Sensorachse des Neigungssensors gegenüber der Richtung der Erdbeschleunigung der Horizontalen entspricht, wobei ein Zusammenhang zwischen Sensorsignal des Neigungssensors und entsprechenden Neigungen der Sensorachse gegenüber der Richtung der Erdbeschleunigung oder der Horizontal durch eine Kennlinie des Neigungssensors gegeben ist, wird in einem ersten Erfassungsschritt der Neigungssensor in einer vorgegebenen Anfangsorientierung angeordnet und ein erstes Sensorsignal erfasst. In wenigstens drei weiteren Erfassungsschritten wird der Neigungssensor jeweils durch Drehen in verschiedene, vorgegebene weitere Orientierungen im Raum gebracht. Es werden jeweils entsprechende Sensorsignale erfasst, wobei die Drehungen um Drehachsen erfolgen, die nicht parallel zur Erdbeschleunigung sind, und wenigstens zwei der Drehungen um verschiedene Drehachsen erfolgen. Schließlich werden in einem Auswertungsschritt aus den wenigstens vier Orientierungen und den entsprechenden Sensorsignalen sowohl die Kennlinie des Neigungssensors als auch die tatsächliche Lage der Sensorachse in dem Neigungssensor oder in einer der vorgegebenen Orientierungen bestimmt.

Das erfindungsgemäße Verfahren ist zur Kalibrierung beliebiger Neigungssensoren geeignet. Insbesondere können die Neigungssensoren schon bei der Kalibrierung in entsprechenden Neigungssensorsystemen vorhanden sein, wobei die Drehung der Neigungssensoren durch Drehung der Neigungssensorsysteme erfolgt.

Die Sensorsignale des Neigungssensors geben die Neigung der Sensorachse gegenüber der Erdbeschleunigung oder der zur Erdbeschleunigung orthogonalen Horizontalen wieder. Der Zusammenhang zwischen den Sensorsignalen und dem Neigungswinkel der Sensorachse gegenüber der Richtung der Erdbeschleunigung oder der Horizontalen ist dabei zweckmäßigerweise so angegeben, dass sich eine lineare Kennlinie ergibt. Je nach Ausbildung des Neigungssensors kann beispielsweise die Kennlinie die Abhängigkeit des Sensorsignals, beispielsweise eines Spannungssignals entsprechender Größe, von dem Neigungswinkel selbst, dem Kosinus des Neigungswinkels oder des Sinus des Neigungswinkels wiedergeben. Eine solche lineare Kennlinie lässt sich vollständig durch Angabe des Achsenabschnitts und der Steigung definieren, so dass zur Bestimmung der Kennlinie nur zwei Parameter ermittelt werden müssen.

Unter der Kennlinie eines Sensors im Sinne der Erfindung wird insbesondere ein Zusammenhang zwischen Sensorsignalen und Neigungswinkeln nur in dem für eine spätere Anwendung relevanten Bereich verstanden. Ist dieser hinreichend klein, kann die Kennlinie wenigstens näherungsweise linear sein.

Nach der Erfassung des ersten Sensorsignals des Neigungssensors in der vorgegebenen Orientierung in dem ersten Erfassungsschritt, das heißt in der vorgegebenen Anfangsorientierung, werden drei weitere Erfassungsschritte durchgeführt, wobei der Neigungssensor jeweils durch Drehen in verschiedene, vorgegebene weitere Orientierungen im Raum gebracht wird und jeweils entsprechende Sensorsignale erfasst werden.

Unter Drehungen werden hierbei insbesondere auch Schwenkbewegungen verstanden, da diese in Bezug auf die hier nur relevanten Neigungen gegenüber der Erdbeschleunigung oder der Horizontalen Drehungen entsprechen.

Während die Anfangsorientierung grundsätzlich beliebig sein kann, erfolgen die Drehungen um Drehachsen, die nicht parallel zur Erdbeschleunigung sind, um zu erreichen, dass die Sensorachse tatsächlich in verschiedene Neigungswinkel gegenüber der Erdbeschleunigung oder einer dazu orthogonalen Horizontalen gebracht wird.

Um weiterhin auch die tatsächliche Lage der Sensorachse feststellen zu können, erfolgen wenigstens zwei der Drehungen um verschiedene Drehachsen. Dabei ist es für die Funktion des Verfahrens unerheblich, in welcher Reihenfolge die Drehungen ausgeführt werden, die Reihenfolge muss lediglich im Auswertungsschritt entsprechend berücksichtigt werden.

In dem Auswertungsschritt werden in Abhängigkeit von den wenigstens vier Orientierungen, das heißt der Anfangsorientierung und den verschiedenen, vorgegebenen weiteren Orientierungen in den drei weiteren Erfassungsschritten, und den entsprechenden Sensorsignalen sowohl die Kennlinie des Neigungssensors als auch die tatsächliche Lage der Sensorachse in dem Neigungssensor oder in einer der vorgegebenen Orientierungen bestimmt. Unter der Bestimmung der Kennlinie wird dabei eine wenigstens näherungsweise Bestimmung der tatsächlichen Kennlinie verstanden, bei der die reale Kennlinie durch eine parametrisierbare Modellkennlinie angenähert sein kann. Insbesondere kann als Modellkennlinie eine Linearisierung der Kennlinie um einen gegebenen Arbeitspunkt verwendet werden. Die Bestimmung der Kennlinie erfolgt dann durch Bestimmung der Parameter der Kennlinie.

Zur Auswertung kann die Lage der Sensorachse durch entsprechende Koordinatenvariablen, beispielsweise Winkel in einem Kugelkoordinatensystem oder kartesische Koordinaten eines Einheitsvektors in Richtung der Sensorachse, ausgedrückt werden. Die jeweilige Neigung der Sensorachse gegenüber der Erdbeschleunigung kann dann anhand der Anfangsorientierungen und der weiteren Orientierungen im Raum berechnet werden. Nach Vorgabe einer funktionalen Form der Kennlinie ergeben sich dann für die Parameter der Kennlinie und die tatsächliche Lage der Sensorachse, beispielsweise ausgedrückt durch entsprechende Koordinaten, Gleichungen, in die die Größen der Sensorsignale eingehen.

Diese Gleichungen können dann numerisch oder gegebenenfalls analytisch gelöst werden.

Werden mehr Erfassungsschritte durchgeführt als unbekannte Variablen bzw. Parameter zu bestimmen sind, können zur Bestimmung der Werte der Variablen bzw. Parameter entsprechende Anpassungsverfahren, zum Beispiel basierend auf der Methode der kleinsten Fehlerquadrate, verwendet werden.

Die tatsächliche Lage der Sensorachse kann dabei relativ zu dem Neigungssensor oder in einer der vorgegebenen Orientierungen bestimmt werden. Die entsprechenden tatsächlichen Lagen sind jeweils einfach in Abhängigkeit von den Orientierungen ineinander umrechenbar. Insbesondere kann auch die Lage relativ zu einem mit dem Neigungssensor mechanisch fest verbundenen Abschnitt eines Neigungssensorsystems bestimmt werden, was ebenfalls nur einer einfachen Koordinatentransformation entspricht.

Das erfindungsgemäße Kalibrierungsverfahren ermöglicht somit die Bestimmung nicht nur der Kennlinie des Neigungssensors, bei einer linearen Kennlinie also des Achsenabschnitts ("Offset") und der Steigung der Kennlinie bzw. der Sensitivität des Neigungssensors, sondern auch der tatsächlichen Lage der Sensorachse, wodurch eine sehr genaue Kalibrierung des Neigungssensors erhalten wird. Hierdurch können zum einen Kalibrierungsfehler, die durch nicht perfekt horizontale Ausrichtung der tatsächlichen Sensorachsen entstehen können, vermieden und zum anderen insbesondere auch Bestückungsfehler, die bei einem späteren Einbau des Neigungssensors bzw. eines Neigungssensorsystems beispielsweise in ein Fahrzeug auftreten können, von Kalibrierungsfehlern klar unterschieden werden.

Weiterhin ist es leicht möglich, bei Qualitätskontrollen Neigungssensoren auszusondern, bei denen die tatsächliche Lage der Sensorachse um mehr als eine vorgegebene Toleranz von einer vorgegebenen Soll-Lage abweicht. Hierdurch kann insbesondere eine zuverlässige Funktion der Neigungssensoren bei Verwendung der mit dem erfindungsgemäßen Verfahren bestimmten Kennlinie und tatsächlichen Lage der Sensorachse gewährleistet werden.

Weiterbildungen und bevorzugte Ausführungsformen der Erfindung sind in der Beschreibung, den Ansprüchen und den Zeichnungen beschrieben.

Grundsätzlich kann der Neigungssensor in den drei weiteren Erfassungsschritten um drei verschiedene Drehachsen gedreht werden. Ist eine erwartete Lage der Sensorachse relativ zu dem Neigungssensor bekannt, ist es jedoch bevorzugt, dass in den drei weiteren Erfassungsschritten zwei der Drehungen mit jeweils vorgegebenen ersten bzw. zweiten Drehwinkeln um eine erste Drehachse erfolgen, und eine weitere Drehung um einen vorgegebenen dritten Winkel um eine zweite vorgegebene Drehachse erfolgt, die nicht parallel zu der ersten Drehachse ist, wobei die Drehachse, um die die erste Drehung erfolgt, nicht parallel zu der Sensorachse in der erwarteten Lage in der Anfangsorientierung ist, und dass in dem Auswertungsschritt die Kennlinie und die tatsächliche Lage der Sensorachse in einer der Orientierungen oder die tatsächliche Lage relativ zu dem Neigungssensor in Abhängigkeit von der Anfangsorientierung des Neigungssensors, von den Lagen der ersten und zweiten Drehachse, den Drehwinkeln und den entsprechenden Sensorsignalen ermittelt werden. Die Reihenfolge der Drehungen ist dabei beliebig, soweit die Bedingung in Bezug auf die erste Drehung beachtet wird.

Bei dieser Weiterbildung wird davon ausgegangen, dass die Lage der Sensorachse des Neigungssensors nicht als völlig unbekannt angenommen wird, sondern eine gewisse Lage, beispielsweise bestimmt durch den Herstellungsprozess, erwartet wird. Die Drehachse, um die die erste Drehung erfolgt, soll dann nicht parallel zu der Sensorachse in der erwarteten Lage in der Anfangsorientierung ausgerichtet sein. Eine Drehung um die tatsächliche Sensorachse, deren Lage sich zumindest nahe der erwarteten Lage befinden sollte, würde sonst nicht zu einer neuen Orientierung der Sensorachse und damit neuen, relevanten Sensorsignalen führen, da die so erhaltene Neigung der Sensorachse zu der Erdbeschleunigung oder der Horizontalen gleich bliebe. Die Drehachse sollte besonders bevorzugt außerhalb eines Schwankungsbereichs der tatsächlichen Sensorachsen um die erwartete Lage der Sensorachse liegen, damit auch tatsächlich neue, sich von der vorhergehenden Erfassung verschiedene Sensorsignale und Orientierungen zur Erdbeschleunigung ergeben.

Durch die Verwendung von nur zwei Drehachsen kann das Verfahren wesentlich einfacher durchgeführt werden, da beispielsweise der zu kalibrierende Neigungssensor oder ein diesen Neigungssensor enthaltendes Neigungssensorsystem auf einer Orientierungseinrichtung mit nur zwei Drehachsen, beispielsweise einem entsprechenden um zwei Achsen gegenüber der Erdbeschleunigung drehbaren Tisch mit entsprechenden Halterungen, orientiert werden kann. Solche Vorrichtungen sind erheblich einfacher und damit auch billiger als Vorrichtungen, die Drehungen um drei verschiedene Achsen gestatten.

Bei der Auswertung, zu der die Anfangsorientierung des Neigungssensors, die Lagen der ersten und der zweiten Drehachse, die Drehwinkel und die entsprechenden Sensorsignale verwendet werden, braucht bei einer linearen Kennlinie nur der Achsenabschnitt und die Steigung der Kennlinie ermittelt zu werden. Durch die Verwendung von nur zwei Drehachsen wird weiterhin die Ermittlung der tatsächlichen Lage der Sensorachse und der Kennlinie wesentlich vereinfacht, da die der Auswertung zugrunde liegenden Formeln wesentlich weniger komplex sind als im allgemeinen Fall.

Besonders bevorzugt ist es, dass die erste und die zweite Drehachse sowie die Sensorachse in der erwarteten Lage in der Anfangsorientierung des Neigungssensors in einer Ebene liegen. Diese Verfahrensvariante ermöglicht nicht nur die Verwendung einer besonders einfachen Orientierungsvorrichtung, wie zum Beispiel eines zweiachsig drehbaren Tischs, sondern erlaubt auch ein einfacheres Auswerteverfahren, in dem nur weniger komplexe Formeln verwendet werden.

Um die Kalibration in einem Neigungswinkelbereich durchzuführen, der bei den meisten Anwendungen, beispielsweise bei Fahrzeugen, relevant ist, ist es bevorzugt, dass der Neigungssensor im ersten Erfassungsschritt so orientiert wird, dass die Sensorachse in der erwarteten Lage horizontal bzw. orthogonal zur Erdbeschleunigung angeordnet ist.

Um eine numerische Lösung der Bestimmungsgleichungen für die Kennlinie und die tatsächliche Lage der Sensorachse vermeiden und eine analytische Lösung ermöglichen zu können, ist es bevorzugt, dass die zweite Drehachse orthogonal zu der ersten Drehachse ausgerichtet ist, wobei besonders bevorzugt beide Drehachsen und die Sensorachse in der erwarteten Lage in der Anfangsorientierung des Neigungssensors in einer horizontalen Ebene liegen. Durch diese Wahl der Orientierungen können beispielsweise bei einer linearen Kennlinie explizite Gleichungen für den Achsenabschnitt und die Steigung einer linearen Kennlinie und die tatsächliche Lage der Sensorachse angegeben werden, wodurch nicht nur eine numerische Lösung der Bestimmungsgleichungen vermieden werden kann, sondern auch beispielsweise Abschätzungen über die Fortpflanzung von Messfehlern, beispielsweise von Fehlern in der Bestimmung der Drehwinkel, wesentlich erleichtert werden.

Besonders vorteilhaft kann das erfindungsgemäße Verfahren bei Neigungssensoren mit mehr als einer Sensorachse durchgeführt werden. Ist der Neigungssensor zur Bestimmung einer Neigung einer weiteren Sensorachse gegenüber der Richtung der Erdbeschleunigung oder der Horizontalen und zur Ausgabe eines entsprechenden weiteren Sensorsignals ausgebildet, wobei ein Zusammenhang zwischen einem weiteren Sensorsignal des Neigungssensors und der Neigung der weiteren Sensorachse gegenüber der Richtung der Erdbeschleunigung oder der Horizontalen durch eine weitere Kennlinie gegeben ist, ist es bevorzugt, dass in den Erfassungsschritten auch jeweils weitere Sensorsignale erfasst werden, und dass in dem Auswertungsschritt aus den vier vorgegebenen Orientierungen und den entsprechenden weiteren Sensorsignalen sowohl die weitere Kennlinie des Neigungssensors als auch die tatsächliche Lage der weiteren Sensorachse in dem Neigungssensor oder in einer der vorgegebenen Orientierungen bestimmt werden.

Das erfindungsgemäße Verfahren und insbesondere auch die bis hierin geschilderten Weiterbildungen und bevorzugten Ausführungsformen können also gleichzeitig für die Kalibrierung bezüglich der zweiten Sensorachse entsprechend ausgeführt werden.

Damit lassen sich insbesondere zweiachsige Neigungssensoren bezüglich beider Sensorachsen unter Verwendung von nur vier Erfassungsschritten kalibrieren, was nicht nur wesentlich einfachere Kalibrierungsvorrichtungen erlaubt, sondern auch erhebliche Zeitersparnisse mit sich bringt.

Ist insbesondere eine erwartete Lage der weiteren Sensorachse in dem Neigungssensor bekannt, ist es bevorzugt, dass in den drei weiteren Erfassungsschritten zwei der Drehungen mit jeweils vorgegebenen ersten bzw. zweiten Drehwinkeln um eine erste Drehachse erfolgen, und eine weitere Drehung um einen vorgegebenen dritten Winkel um eine zweite vorgegebene Drehachse erfolgt, die nicht parallel zu der ersten Drehachse ist, wobei die Drehachse, um die die erste Drehung erfolgt, nicht parallel zu der weiteren Sensorachse in der erwarteten Lage in der Anfangsorientierung des Neigungssensors ist, und dass in Abhängigkeit von der Anfangsorientierung des Neigungssensors, den Lagen der ersten und zweiten Drehachse, von den Drehwinkeln und den entsprechenden weiteren Sensorsignalen die weitere Kennlinie sowie die tatsächliche Lage der weiteren Sensorachse in einer der Orientierungen oder in dem Neigungssensor ermittelt werden.

Wie auch bei der Kalibrierung nur in Bezug auf eine Sensorachse wird durch die Verwendung von nur zwei Drehachsen die Durchführung des Verfahrens und die dazu notwendige Orientierungsvorrichtung erheblich vereinfacht. Besonders bevorzugt ist die Drehachse, um die die erste Drehung erfolgt, auch nicht parallel zu der Sensorachse in der erwarteten Lage in der Anfangsorientierung des Neigungssensors.

Bevorzugt wird der Neigungssensor im ersten Erfassungsschritt so orientiert, dass die Sensorachse in der erwarteten Lage und die weitere Sensorachse in der erwarteten Lage orthogonal zur Erdbeschleunigung ausgerichtet sind. Durch diese Wahl der Anfangsorientierung werden Messpunkte in einem häufig verwendeten Anwendungsbereich von Neigungssensoren, insbesondere bei Fahrzeugen, erfasst, so dass die Kalibrierung innerhalb des Anwendungsbereichs besonders genau ist.

Bevorzugt liegt die erste und/oder die zweite Drehachse in einer Ebene, die durch die Sensorachsen in den erwarteten Lagen im ersten Erfassungsschritt aufgespannt wird. Diese Wahl der Drehachsen erlaubt, wie bei der Kalibrierung nur einer Sensorachse, eine besonders einfache Auswertung der aufgenommenen Sensorsignale. Insbesondere kann eine analytische Lösung der Bestimmungsgleichungen für die Kennlinie, insbesondere eine lineare Kennlinie, und die tatsächliche Lage der Sensorachsen erfolgen.

Besonders bevorzugt ist die Drehachse, um die die erste Drehung erfolgt, dabei im Wesentlichen eine Winkelhalbierende zwischen den Sensorachsen in den erwarteten Lagen im ersten Erfassungsschritt. Dadurch werden bei der Kalibrierung die Sensorachse und die weitere Sensorachse im Wesentlichen gleich behandelt, so dass beide mit ähnlicher Genauigkeit kalibrierbar sind. Darüber hinaus können für beide Sensorachsen die gleichen Auswertungsverfahren verwendet werden.

Weiterer Gegenstand der Erfindung ist ein Neigungssensorsystem mit einem Neigungssensor und einer mit dem Neigungssensor verbundenen Auswerteeinrichtung zur Auswertung von Sensorsignalen des Neigungssensors, mittels derer anhand der mit dem erfindungsgemäßen Verfahren erhaltenen tatsächlichen Lage der Sensorachse und Kennlinie aus den Sensorsignalen die Neigung des Neigungssensors gegenüber der Richtung der Erdbeschleunigung oder der Horizontalen oder eine vorgegebene Funktion dieser Neigung bestimmbar ist. Die Ausgabevorrichtung muss also nicht unbedingt den Neigungswinkel der Sensorachse gegenüber der Richtung der Erdbeschleunigung oder der Horizontalen selbst ausgeben, sondern kann eine beliebige, vorgegebene Funktion dieses Neigungswinkels ausgeben. Insbesondere kann der Neigungswinkel der Sensorachse in einen Neigungswinkel einer anderen, fest mit dem Neigungssensor verbundenen Neigungssystemkomponente, beispielsweise eines Gehäuses, umgesetzt werden.

Besonders bevorzugt sind daher Neigungssensor und Auswerteeinrichtung mechanisch zu einer Einheit zusammengefasst, wobei mittels der Auswerteeinrichtung die Neigung vorgegebener, beispielsweise durch Kanten der Einheit definierter, Bezugsrichtungen zu der Richtung der Erdbeschleunigung oder der Horizontalen bestimmbar sind, so dass sich bei Einbau eines solchen Sensorsystems in eine vorgegebene Vorrichtung, beispielsweise ein Fahrzeug, einfach Neigungen der Vorrichtung anhand der Neigungen des Neigungssensorsystems bzw. der Neigungssensoreinheit bestimmen lassen.

Die Auswerteeinrichtung weist besonders bevorzugt eine Speichereinrichtung auf, in der die Parameter der Kennlinie und die tatsächliche Lage der Sensorachse abspeicherbar sind. Weiterhin kann sie einen Prozessor zur Verarbeitung der Neigungssensorsignale unter Verwendung der gespeicherten Parameter und tatsächliche Lage der Sensorachse aufweisen.

Eine bevorzugte Ausführungsform der Erfindung wird nun beispielhaft anhand der Zeichnungen beschrieben. Es zeigen:

Fig. 1 eine schematische Darstellung eines Neigungssensorsystems auf einer Kalibrierungseinrichtung,

Fig. 2 eine vereinfachte Darstellung des Neigungssensorsystems in Fig. 1 nach einer ersten Drehung,

Fig.3 das Neigungssensorsystem in Fig. 2 nach einer weiteren Drehung, und

Fig. 4 das Neigungssensorsystem in Fig. 3 nach einer dritten Drehung um eine zweite Drehachse.

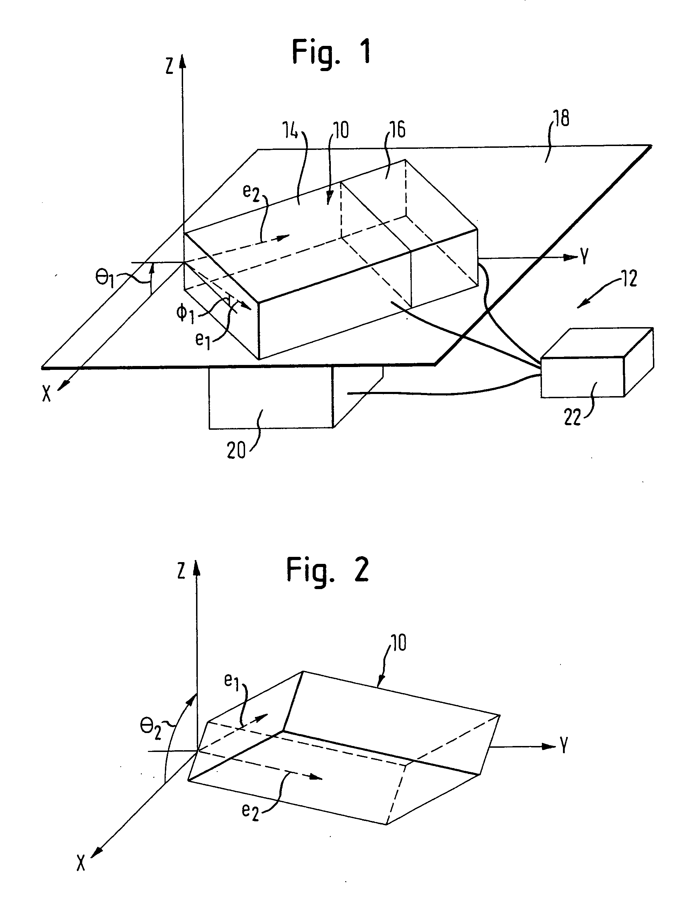

In Fig. 1 ist ein nur grob schematisch gezeigtes Neigungssensorsystem 10 auf einer ebenfalls nur grob schematisch gezeigten Kalibrierungsvorrichtung 12 angeordnet.

Das Neigungssensorsystem 10 umfasst einen zweiachsigen Neigungssensor 14 und eine Auswerteeinrichtung 16, die mechanisch starr miteinander verbunden und zu einer Einheit zusammengefasst sind.

Der Neigungssensor 14 weist zwei Sensorachsen auf, deren Lagen bzw. Richtungen durch die durch gestrichelte Pfeile angedeuteten Einheitsvektoren $e_1$ und $e_2$ wiedergegeben sind. Die Soll-Lagen bzw. Orientierungen der Sensorachsen verlaufen entlang der zueinander senkrechten Kanten des Neigungssensorsystems 10.

Der Neigungssensor 14 erzeugt für die dem Einheitsvektor ei entsprechende erste Sensorachse und die dem Einheitsvektor $e_2$ entsprechende zweite Sensorachse zugeordnete erste und zweite Sensorsignale, die jeweils den Winkeln zwischen den Einheitsvektoren und der X- und Y-Ebene des raumfesten X-, Y- und Z-Koordinatensystems, dessen Z-Achse parallel aber entgegengesetzt zu der Erdbeschleunigung ausgerichtet ist, bzw. dem Sinus dieser Winkel, entsprechen. Der Neigungssensor 14 weist in den Figuren nicht gekennzeichnete Signalausgänge für das erste und zweite Sensorsignal auf, die mit der Auswerteeinrichtung 16 verbunden sind.

Die Auswerteeinrichtung 16 weist, in den Figuren nicht gezeigt, einen Speicher und einen Prozessor auf, mit denen von dem Neigungssensor 14 empfangene Signale verarbeitbar und über einem nicht gezeigten Neigungssensorsystemausgang an andere Einrichtungen ausgebbar sind.

Die Auswerteeinrichtung 16 weist weiterhin einen Eingang auf, über den Kalibrierungsdaten in den Speicher einlesbar und dort permanent speicherbar sind.

Das Neigungssensorsystem 10 ist auf der Kalibrierungsvorrichtung 12 angeordnet. Diese umfasst einen um zwei Achsen drehbaren Tisch 18 mit einer Antriebseinheit 20 sowie eine Steuereinheit 22, die mit der Antriebseinheit 20 verbunden ist.

Der Tisch 18 ist um die Y-Achse und die X-Achse drehbar. Er ist dazu mit der Antriebseinrichtung 20 gekoppelt, mit der der Tisch 18 um die beiden Achsen drehbar ist.

Die Steuereinrichtung 22 dient zur Durchführung der Kalibrierung. Sie ist dazu mit der Antriebseinrichtung 20 verbunden und steuert die Drehbewegung des Tischs 18 um die X- und/oder Y-Achse.

Weiterhin ist die Steuereinrichtung 22 mit den Signalausgängen des Neigungssensors 14 verbunden, um von diesem abgegebene Sensorsignale zu erfassen.

Schließlich ist die Steuereinrichtung 22 mit der Auswerteeinrichtung 16 verbunden, um dieser nach der Kalibrierung Daten für die bestimmten Kennlinien in Bezug auf die beiden Sensorachsen und die tatsächlichen Lagen der Sensorachsen relativ zu den Kanten des Neigungssensorsystems 10 zu übermitteln.

Zur Durchführung des Kalibrierungsvorgangs weist die Steuereinrichtung 22 neben entsprechenden Ein- und Ausgabeschnittstellen einen Prozessor und einen Speicher auf. Die Einrichtung ist dabei zur Durchführung des erfindungsgemäßen Verfahrens nach einer bevorzugten Ausführungsform, das im Folgenden beschrieben wird, programmiert.

Zunächst wird das Neigungssensorsystem 10 mit dem Neigungssensor 14 auf dem Tisch 18 mittels in den Figuren nicht gezeigter Spannvorrichtungen befestigt. Der Tisch 18 und damit das Neigungssensorsystem 10 und insbesondere dessen die vermuteten Lagen der Sensorachsen definierenden, zueinander senkrechten Längskanten des Neigungssensorsystems 10 sind dabei horizontal, d.h. orthogonal zur Erdbeschleunigung, angeordnet. Weiterhin ist das Neigungssensorsystem 10 so angeordnet, dass die als erste Drehachse fungierende Y-Achse gerade den Winkel zwischen den zueinander senkrechten Längskanten und damit den vermuteten Sensorachsen halbiert.

In dieser Anfangsorientierung werden nun Sensorsignale $S_{1i}$ erfasst, wobei der Index i gleich 1 für ein Signal in Bezug auf die erste, durch den Vektor $e_1$ gekennzeichnete Sensorachse, und gleich 2 für die andere Sensorachse ist. Diese Art der Indizierung wird auch für in den folgenden Schritten erfasste Sensorsignale und andere auf jeweils eine der Sensorachsen bezogene Größen verwendet.

Die erfassten Sensorsignale werden jeweils der Steuereinrichtung 22 zur Auswertung zugeführt.

Es werden nun drei weitere Erfassungsschritte durchgeführt, die grob schematisch in den Fig. 2 bis 4 dargestellt sind, wobei jeweils nur noch das X-, Y- und Z-Koordinatensystem und das Neigungssensorsystem 10 mit den Einheitsvektoren $e_1$ und $e_2$ gezeigt ist.

Zunächst wird das Neigungssensorsystem 10 um die Y-Achse um einen Winkel $\theta_1$ gedreht, der in diesem Ausführungsbeispiel 45° beträgt. In der dann erreichten, in Fig. 2 dargestellten Orientierung werden Sensorsignale $S_{2i}$ erfasst, wobei hier wie auch im Folgenden die Indizierung die gleich wie bei den ersten Sensorsignalen ist.

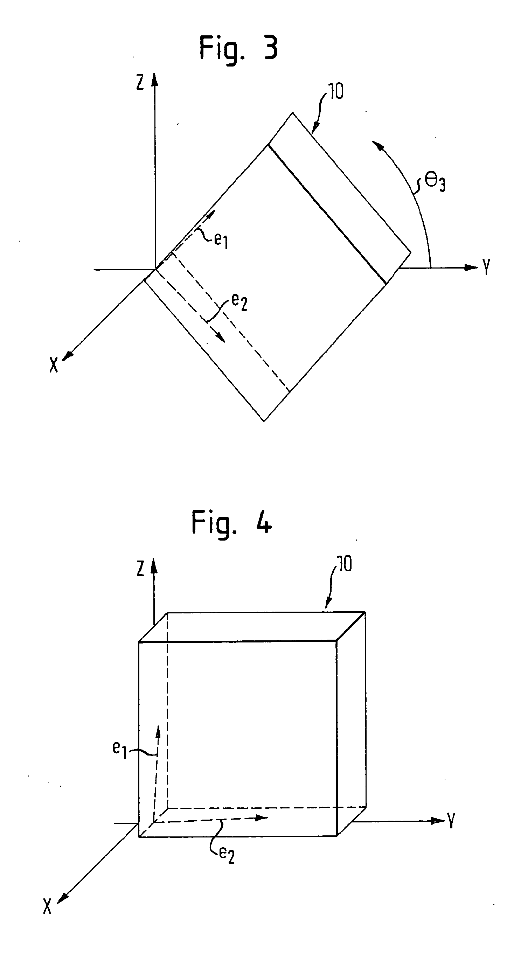

Daraufhin wird das Neigungssensorsystem 10 ein weiteres Mal um die Y-Achse um einen Winkel von 45° gedreht, wodurch sich insgesamt gegenüber der Anfangsorientierung ein Drehwinkel $\theta_2$ ergibt, der im Beispiel 90° beträgt (vgl. Fig. 3). Entsprechende Sensorsignale $S_{3i}$ werden dann von der Steuereinrichtung 22 erfasst.

In dem vierten Erfassungsschritt wird das Neigungssensorsystem 10, angesteuert durch die Steuereinrichtung 22, um die X-Achse um einen Winkel $\theta_3$ gedreht, der in diesem Ausführungsbeispiel ebenfalls 45° beträgt. In der so erreichten, in Fig. 4 gezeigten Orientierung werden dann Sensorsignale $S_{4i}$ von der Steuereinheit 22 erfasst.

Nach diesen vier Erfassungsschritten wird ein Auswertungsschritt in der Steuereinrichtung 22 ausgeführt, bei dem auf der Basis der horizontalen Anfangsorientierung, der Lage der Drehachsen, der Drehwinkel $\theta_1$, $\theta_2$ und $\theta_3$ sowie der erfassten Sensorsignale $S_{1i}$, $S_{2i}$, $S_{3i}$ und $S_{4i}$ für die beiden Sensorachsen die Kennlinie und die tatsächlichen Lagen der Sensorachsen bestimmt werden.

Dabei wird jeweils eine lineare Kennlinie für die Sensorsignale $S_i$ in Bezug auf die Sensorachse i

$$S_i = A_{0i} + A_{Si} \cdot \sin(\phi_i)$$

angenommen, bei der $A_{0i}$ den Achsenabschnitt und $A_{Si}$ die Steigung bzw. Sensitivität des Neigungssensors bezüglich der Sensorachse i sind und $\phi_i$ den Neigungswinkel der jeweiligen Sensorachse bzw. des jeweiligen Einheitsvektors $e_i$ gegenüber der horizontalen X-Y-Ebene bezeichnet.

Die Lagen der Einheitsvektoren $e_i$ und damit der entsprechenden Sensorachsen in der Anfangsorientierung sind durch die Komponenten der Einheitsvektoren in dem X-, Y- und Z-Koordinatensystem gegeben. Die Komponenten der Einheitsvektoren $e_i$ in der Anfangsorientierung werden mit $x_i$, $y_i$ und $z_i$ bezeichnet und genügen der Nebenbedingung $x_i^2 + y_i^2 + z_i^2 = 1$.

Zur Ableitung der Formeln für die Achsenabschnitte $A_{0i}$, die Steigungen $A_{Si}$ und die Lagen $x_i$, $y_i$ und $z_i$ werden die jeweils gedrehten Einheitsvektoren $e_i$ berechnet und der Sinus ihres jeweiligen Neigungswinkels $\phi_i$ gegenüber der X-Y-Ebene berechnet. $\sin(\phi_i)$ wird damit als Funktion der Drehwinkel $\theta_1$, $\theta_2$ und $\theta_3$, der Lagen der Drehachsen und der Anfangsorientierung ausgedrückt und, wie auch die entsprechenden Sensorsignale $S_i$, jeweils in die Formel für die Kennlinie eingesetzt. Es ergeben sich sowohl für i = 1 als auch für i = 2 vier Gleichungen, die durch die geschickte Wahl der Drehachsen und der Anfangsorientierung explizit lösbar sind. Diese lauten für beliebige Drehwinkel $\theta_1$, $\theta_2$ und $\theta_3$:

$$A_{0i} = \frac{S_{3i} \cdot \sin\theta_1 - S_{2i} \cdot \sin\theta_2 + S_{1i} \cdot \sin(\theta_2 - \theta_1)}{\sin\theta_1 - \sin\theta_2 + \sin(\theta_2 - \theta_1)}$$

$$A_{Si} = \left( \left[ \frac{S_{4i} - A_{0i}}{\sin\theta_3} - \frac{\sin\theta_2 \cdot \cos\theta_3}{\sin\theta_1 \cdot \sin\theta_3}(S_{2i} - A_{0i}) - \frac{\cos\theta_3 \cdot \sin(\theta_1 + \theta_2)}{\sin\theta_2 \cdot \sin\theta_3}(S_{1i} - A_{0i}) \right]^2 \right.$$
$$\left. + \left[ \frac{S_{2i} - A_{0i} - (S_{1i} - A_{0i}) \cdot \cos\theta_1}{\sin\theta_1} \right]^2 + \left[ S_{1i} - A_{0i} \right]^2 \right)^{1/2}$$

$$z_i = \frac{S_{1i} - A_{0i}}{A_{Si}}$$

$$y_i = \frac{S_{2i} - A_{0i} - (S_{1i} - A_{0i}) \cdot \cos \theta_1}{A_{Si} \cdot \sin\theta_1}$$

$$x_i = \sqrt{1 - y_i^2 - z_i^2}$$

In der Steuereinrichtung 22 werden anhand dieser Formeln die Kennlinienparameter $A_{0i}$ und $A_{Si}$ und damit die jeweilige Kennlinie sowie die Koordinaten der Einheitsvektoren in Richtung der Sensorachsen $x_i$, $y_i$ und $z_i$ berechnet und an die Auswerteeinrichtung 16 übermittelt, wo diese in deren Speicher permanent gespeichert werden.

Die Auswerteeinrichtung 16 ist so programmiert, dass sie anhand dieser Daten für die Kennlinie und die tatsächliche Lage der Sensorachsen bezogen auf das X-, Y- und Z-Koordinatensystem in der Anfangsorientierung des Neigungssensorsystems 10 und damit relativ zu dem Neigungssensorsystem 10 aus Sensorsignalen des Neigungssensors 14 entsprechende Neigungswinkel berechnet und über eine nicht gezeigte Schnittstelle ausgibt.

Bezugszeichenliste

| | |
|---|---|
| 10 | Neigungssensorsystem |
| 12 | Kalibrierungsvorrichtung |
| 14 | Neigungssensor |
| 16 | Auswerteeinrichtung |
| 18 | Tisch |
| 20 | Antriebseinrichtung |
| 22 | Steuereinrichtung |

| | |
|---|---|
| $e_1$ | Einheitsvektor |
| $e_2$ | Einheitsvektor |
| $\theta_1$ | erster Drehwinkel |
| $\theta_2$ | zweiter Drehwinkel |
| $\theta_3$ | dritter Drehwinkel |
| $\phi_1$ | Neigungswinkel |
| $\phi_2$ | Neigungswinkel |

**Patentansprüche**

1.  Verfahren zur Kalibrierung eines Neigungssensors (14), der zur Bestimmung einer Neigung gegenüber der Richtung der Erdbeschleunigung oder der Horizontalen und zur Ausgabe eines entsprechenden Sensorsignals dient, das der Neigung einer Sensorachse des Neigungssensors (14) gegenüber der Richtung der Erdbeschleunigung oder der Horizontalen entspricht, wobei ein Zusammenhang zwischen Sensorsignalen des Neigungssensors (14) und entsprechenden Neigungen der Sensorachse gegenüber der Richtung der Erdbeschleunigung oder der Horizontalen durch eine Kennlinie des Neigungssensors (14) gegeben ist, bei dem
in einem ersten Erfassungsschritt der Neigungssensor (14) in einer vorgegebenen Anfangsorientierung angeordnet und ein erstes Sensorsignal erfasst wird,
in wenigstens drei weiteren Erfassungsschritten der Neigungssensor (14) jeweils durch Drehen in verschiedene, vorgegebene weitere Orientierungen im Raum gebracht wird und jeweils entsprechende Sensorsignale erfasst werden, wobei die Drehungen um Drehachsen erfolgen, die nicht parallel zur Erdbeschleunigung sind, und wenigstens zwei der Drehungen um verschiedene Drehachsen erfolgen, und
in einem Auswertungsschritt aus den wenigstens vier Orientierungen und den entsprechenden Sensorsignalen sowohl die Kennlinie des Neigungssensors (14) als auch die tatsächliche Lage der Sensorachse in dem Neigungssensor (14) oder in einer der vorgegebenen Orientierungen bestimmt werden.

2.  Verfahren nach Anspruch 1,
**dadurch gekennzeichnet,**
**dass** eine erwartete Lage der Sensorachse relativ zu dem Neigungssensor (14) bekannt ist,
**dass** in den drei weiteren Erfassungsschritten zwei der Drehungen mit jeweils vorgegebenen ersten bzw. zweiten Drehwinkeln um eine erste Drehachse erfolgen, und eine weitere Drehung um einen vorgegebenen dritten Winkel um eine zweite vorgegebene Drehachse erfolgt, die nicht parallel zu der ersten Drehachse ist, wobei die Drehachse, um die die erste Drehung erfolgt, nicht parallel zu der Sensorachse in der erwarteten Lage in der Anfangsorientierung ist, und

**dass** in dem Auswertungsschritt die Kennlinie und die tatsächliche Lage der Sensorachse in einer der Orientierungen oder die tatsächliche Lage relativ zu dem Neigungssensor (14) in Abhängigkeit von der Anfangsorientierung des Neigungssensors (14), von den Lagen der ersten und zweiten Drehachse, den Drehwinkeln und den entsprechenden Sensorsignalen ermittelt werden.

3. Verfahren nach Anspruch 2,
   **dadurch gekennzeichnet,**
   **dass** die erste und die zweite Drehachse sowie die Sensorachse in der erwarteten Lage in der Anfangsorientierung des Neigungssensors (14) in einer Ebene liegen.

4. Verfahren nach Anspruch 2 oder 3,
   **dadurch gekennzeichnet,**
   **dass** der Neigungssensor (14) im ersten Erfassungsschritt so orientiert wird, dass die Sensorachse in der erwarteten Lage horizontal angeordnet ist.

5. Verfahren nach einem der Ansprüche 2 bis 4,
   **dadurch gekennzeichnet,**
   **dass** die zweite Drehachse orthogonal zu der ersten Drehachse ausgerichtet ist.

6. Verfahren nach einem der vorhergehenden Ansprüche,
   **dadurch gekennzeichnet,**
   **dass** der Neigungssensor (14) zur Bestimmung einer Neigung einer weiteren Sensorachse gegenüber der Richtung der Erdbeschleunigung oder der Horizontalen und zur Ausgabe eines entsprechenden weiteren Sensorsignals ausgebildet ist, wobei ein Zusammenhang zwischen einem weiteren Sensorsignal des Neigungssensors (14) und der Neigung der weiteren Sensorachse gegenüber der Richtung der Erdbeschleunigung oder der Horizontalen durch eine weitere Kennlinie gegeben ist,
   **dass** in den Erfassungsschritten auch jeweils weitere Sensorsignale erfasst werden, und
   **dass** in dem Auswertungsschritt aus den vier vorgegebenen Orientierungen und den entsprechenden weiteren Sensorsignalen sowohl die weitere Kennlinie des Neigungssensors (14) als auch die tatsächliche Lage der weiteren Sensorachse in dem Neigungssensor (14) oder in einer der vorgegebenen Orientierungen bestimmt werden.

7. Verfahren nach Anspruch 6,
   **dadurch gekennzeichnet,**
   **dass** eine erwartete Lage der weiteren Sensorachse in dem Neigungssensor (14) bekannt ist,
   **dass** in den drei weiteren Erfassungsschritten zwei der Drehungen mit jeweils vorgegebenen ersten bzw. zweiten Drehwinkeln um eine erste Drehachse erfolgen, und eine weitere Drehung um einen vorgegebenen dritten Winkel um eine zweite vorgegebene Drehachse erfolgt, die nicht parallel zu der ersten Drehachse ist, wobei die Drehachse, um die die erste Drehung erfolgt, nicht parallel zu der weiteren Sensorachse in der erwarteten Lage in der Anfangsorientierung des Neigungssensors (14) ist, und
   **dass** in Abhängigkeit von der Anfangsorientierung des Neigungssensors (14), den Lagen der ersten und zweiten Drehachse, von den Drehwinkeln und den entsprechenden weiteren Sensorsignalen die weitere Kennlinie sowie die tatsächliche Lage der weiteren Sensorachse in einer der Orientierungen oder in dem Neigungssensor (14) ermittelt werden.

8. Verfahren nach Anspruch 6 oder 7,
   **dadurch gekennzeichnet,**
   **dass** der Neigungssensor (14) im ersten Erfassungsschritt so orientiert wird, das die Sensorachse in der erwarteten Lage und die weitere Sensorachse in der erwarteten Lage orthogonal zur Erdbeschleunigung ausgerichtet sind.

9. Verfahren nach Anspruch 7 oder 8,
   **dadurch gekennzeichnet,**
   **dass** die erste und/oder die zweite Drehachse in einer Ebene liegen, die durch die Sensorachsen in den erwarteten Lagen im ersten Erfassungsschritt aufgespannt wird.

**10.** Verfahren nach Anspruch 9,
**dadurch gekennzeichnet,**
**dass** die Drehachse, um die die erste Drehung erfolgt, im Wesentlichen eine Winkelhalbierende zwischen den Sensorachsen in den erwarteten Lagen im ersten Erfassungsschritt ist.

**11.** Neigungssensorsystem mit einem Neigungssensor (14) und einer mit dem Neigungssensor (14) verbundenen Auswerteeinrichtung (16) zur Auswertung von Sensorsignalen des Neigungssensors (14), mittels derer anhand der mit einem Verfahren nach einem der vorhergehenden Ansprüche erhaltenen tatsächlichen Lage der Sensorachse und Kennlinie aus den Sensorsignalen die Neigung des Neigungssensors (14) gegenüber der Richtung der Erdbeschleunigung oder der Horizontalen oder eine vorgegebene Funktion dieser Neigung bestimmbar ist.

# Fig. 1

# Fig. 2

## Fig. 3

## Fig. 4